# EUROPEAN PATENT APPLICATION

(11) **EP 1 898 652 A1**
(43) Date of publication of application: **12.03.2008**
(21) Application number: 06018653.3
(22) Date of filing: 06.09.2006
(51) Int. Cl.: H04Q 3/545, H04L 12/24, G06F 11/14, G06F 17/30

(54) **Method, network element and network arrangement for distributing database changes in a telecommunications network**

(71) Applicant: Nokia Siemens Networks GmbH & Co. KG, 81541 München (DE)
(72) Inventor: Karakostas, Athanasios, 12135 Athen (GR)

(57) **Abstract**

The present invention relates to a method and a system for distributing database changes in telecommunications networks. More particularly, the present invention relates to a method and a softswitch for distributing subscriber database changes to other network elements of a next generation telecommunications network. In accordance with the inventive method, data-base changes are distributed in a telecommunications network, by detecting a database change in a first network element (110) and determining at least one second network element (120) storing a copy of the database portion that has changed. Then, using the TCAP over SCTP protocol, a message is communicated from the first network element (110) to the at least one second network element (120), the message comprising information that a database change has occurred and instructions as to how to update the corresponding database portion. This message is processed by the at least one second network element (120), which then updates the affected database portion of based on the information contained in the message.

## Description

The present invention relates to a method and a system for distributing database changes in telecommunications networks. More particularly, the present invention relates to a method and a softswitch for distributing subscriber database changes to other network elements of a next generation telecommunications network.

Switches of a telecommunications network, for example softswitches of a next generation network (NGN), comprise large databases storing subscriber related data for each subscriber associated. In modern networks, the subscriber is allowed to at least partially modify his or her relevant data through a telephone or by means of a self-care graphical user interface, for example over the internet, including activation or deactivation of services like call forwarding, call waiting, etc.

In prior art landline networks, the database is (redundantly) stored in a single switch. In these networks, no need existed to distribute database changes to other switches.

However, in a NGN, a number of less reliable but cost efficient switches replace the highly reliable but expensive, monolithic switches of the past. To maintain the overall reliability of the network, it is contemplated to provide service to a given subscriber through a number of geographically distributed redundant softswitches.

Thus, a need exists in a NGN to distribute configuration changes made in one network element to other network elements.

It is therefore an object of the present invention to provide a method for distributing database changes made in one network element to other network elements.

In accordance with the forgoing objective, there is provided by the invention a method for distributing database changes in a telecommunications network, comprising:
- detecting a database change in a first network element;
- determining at least one second network element storing a copy of the database portion that has changed;
- using the TCAP over SCTP protocol, communicating a message from the first network element to the at least one second network element, the message comprising information that a database change has occurred and instructions as to how to update the corresponding database portion; and
- processing the message and updating the database portion of the at least one second network element based on the information contained in the message.

In accordance with the invention there is also provided a network element and a network arrangement for performing the inventive method.

Using the present invention, novel network arrangements providing the necessary redundancy in serving subscribers by deploying softswitches in geographically disjoint locations may be kept in sync by distributing information on database changes in real time directly from network element to network element using the standardized TCAP over SCTP protocol hierarchy. This approach allows maintaining the synchronicity between softswitches provided by different vendors. Advantageously, the inventive method allows distributing database changes directly among affected network nodes such as switches and does not require a central network management application for distributing the database changes.

Preferred embodiments of the present invention will now be described with reference to drawings, wherein:
Fig. 1 shows a first network arrangement operating in accordance with the present invention, and
Fig. 2 shows a second network arrangement operating in accordance with the present invention.

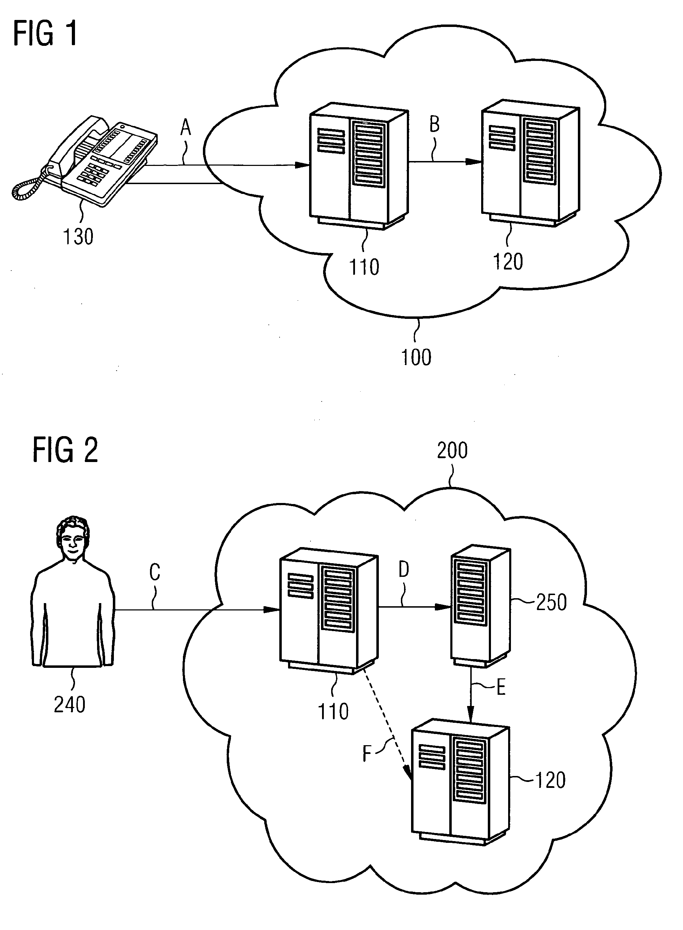

In Fig. 1 there is shown a first network arrangement 100 comprising a first switching network element 110 and a second switching network element 120. A subscriber 130 is shown to be served by network arrangement 100.

In network arrangement 100, subscriber 130 is served by a redundant pair of switches 110, 120. As is well known in the art, a first of these switches may operate in active mode and a second of these switches may operate in standby mode. In order to improve the overall reliability, switches 110 and 120 may be located in geographically disjoint locations to make the overall system immune to local service disruptions, for example from local weather phenomena. Thus, subscriber 130 is administered under more than one switch 110, 120.

In operation of network arrangement 100, subscriber 130 may wish to configure his or her communications account, shown as step A. For example, subscriber 130 may activate, deactivate or configure a service including but not limited to call waiting, call forwarding, or abbreviated dialing. By entering his or her configuration change request on his or her telephone keypad or using a graphical user interface, the database of switch 110 will be modified accordingly.

Switch 110 will then detect the database change and determine that among the various switches (not shown) of the telecommunications network, switch 120 needs to be notified of this configuration change. Then, switch 110 will create a TCAP message which may have the following format:

| | | | | | | | | |
|---|---|---|---|---|---|---|---|---|
| Subscriber ID | | | | | | | | |
| Service (Feature) | | | | | | | | |
| Operation | | | | | | | | |
| Flags | | | | | | | | |
| Act | Auth | Rsrv | Rsrv | Rsrv | | Rsrv | Rsrv | Rsrv |
| First Data Part | | | | | | | | |
| Number of_First Data Part Digits | | | | | | | | |
| Digit | | | | | Digit | | | |
| | | | | | | | | |
| (Digit) | | | | | Digit | | | |
| Second Data Part | | | | | | | | |
| Number of Second Parts Digits | | | | | | | | |
| Digit | | | | | Digit | | | |
| | | | | | | | | |
| (Digit) | | | | | Digit | | | |

For some services, no data parts will be required. Transmitting the activation flag will be sufficient to communicate the database change for services such as call waiting. Other services, such as call forwarding, require one data part, in the case of call forwarding to transmit the forwarded-to number to the second switch 120. Yet other services may require more than one data part to update the database in second switch 120, for example the service abbreviated dialing which requires a first data part for transmitting the list position and a second data part for transmitting the actual directory number to be abbreviated.

From these examples it will be readily apparent to those with skills in the art which services require no data part, one data part, or multiple data parts (for the majority of services, no more than two data parts will be required).

After creating the TCAP message containing an indication that a database change has occurred in switch 110 and instructions as to how to update the corresponding database portion of switch 120, switch 110 will transmit this TCAP message using the SCTP transport mechanism to switch 120, as indicated by arrow B in Fig. 1.

Upon receiving the message, switch 120 processes the message and updates the affected portion of the local database based on the information contained in the message. In more detail, a component of second switch 120 known as TCAP handler receives and decodes the message. The message content is translated and the notification message is processed by the appropriate subsystem of the exchange, leading to the database synchronization action to be performed.

Advantageously, a TCAP application type will be used for the message that is not currently used by any other application. Also, since the TCAP protocol is a standardized protocol, it is interoperable between different switching equipment vendors. When equipped with suitable compatibility flags, messages may traverse, or "tunnel", any network element along the route from first to second switch which cannot interpret the message.

Turning now to Fig. 2, there is shown a variation of the network arrangement described with reference to Fig. 1. In Fig. 2, network arrangement 200 further comprises a network management system 250. An administrator 240, or operator, may modify the database of switch 110, as indicated by step C. In step D, using substantially the same mechanism as described above with reference to Fig. 1, first switch 110 reports the database change to network management system 250.

In one embodiment, network management system 250 may be capable of interpreting the message received in step D. Network management system 250 processes the message and updates the affected portion of the local database based on the information contained in the message. Then, network management system may forward the message (or create a new message having all relevant information) to second switch 120, step E, which also processes the message and updates the affected portion of the local database based on the information contained in the message as explained above with reference to Fig. 1. In an alternative, first switch 110 may chose to send independent messages to both network management systems 250 and second switch 120 (steps D and F, wherein step E does not occur).

In another embodiment, network management system 250 may not be capable of interpreting the message received in step D. In this case, network management system 250 simply passes on the message to second switch 120 as specified by the message compatibility information, step E. Second switch 120 then processes the message and updates the affected portion of the local database based on the information contained in the message as explained above with reference to Fig. 1.

As will be readily apparent to those with skills in the art, other message formats may well be chosen without departing from the present invention. For example, other suitable messages may be chosen by selecting a message format supporting the following: for subscriber-initiated changes of services, the message should contain the information on the affected service, its activation status (active/inactive), and any additional data relevant for the service, such as the forwarded-to number in case of call forwarding.

## Claims

1. A method for distributing database changes in a telecommunications network (100, 200), comprising:
- detecting a database change in a first network element (100);
- determining at least one second network element (100, 250) storing a copy of the database portion that has changed;
- using the TCAP over SCTP protocol, communicating a message from the first network element (110) to the at least one second network element (120, 250), the message comprising information that a database change has occurred and instructions as to how to update the corresponding database portion; and
- processing the message and updating the database portion of the at least one second network element (120, 250) based on the information contained in the message.

2. The method of claim 1, wherein the first network element (110) comprises a soft switch.

3. The method of any of the preceding claims, wherein the at least one second network element (120, 250) comprises at least one of a softswitch (120) and a network management system (250).

4. The method of any of the preceding claims, wherein the first network element (110) and the at least one second network element (120, 250) are located in geographically disjoint locations.

5. The method of any of the preceding claims, wherein the message comprises compatibility information allowing the message to traverse third network elements not having the capability to interpret the message.

6. A network element (110) of a telecommunications network (100, 200), comprising:
- means for detecting a change in a local database;
- means for determining at least one second network element (120, 250) storing a copy of the database portion that has changed; and
- means for sending a message using the TCAP over SCTP protocol to the at least one second network element (120, 250), the message comprising information that a database change has occurred and instructions as to how to update the corresponding database portion.

7. The network element (110) of claim 6, further comprising a softswitch.

8. The network element (110) of any of claims 6 or 7, wherein the message sending means further comprise means to provide the message with compatibility information allowing the message to traverse third network elements not having the capability to interpret the message.

9. A network arrangement (100) for a telecommunications network, comprising a first network element (110) and at least one second network element (120), the first network element (110) comprising:
- means for detecting a change in a local database;
- means for determining at least one second network element (120) storing a copy of the database portion that has changed; and
- means for sending a message using the TCAP over SCTP protocol to the at least one second network element (120), the message comprising information that a database change has occurred and instructions as to how to update the corresponding database portion;
and the at least one second network (120) element comprising means for processing the message and updating the database portion of the at least one second network element based on the information contained in the message.

10. The network arrangement (100) of claim 9, wherein the first network element (110) comprises a soft switch.

11. The network arrangement (100) of any of claims 9 or 10, wherein the at least one second network element comprises (120) at least one of a softswitch and a network management system.

12. The network arrangement (100) of any of claims 9 to 11, wherein the first network element (110) and the at least one second network element (120) are located in geographically disjoint locations.

13. The network arrangement (100) of any of claims 9 to 12, wherein the message comprises compatibility information allowing the message to traverse third network elements not having the capability to interpret the message.
